# EUROPEAN PATENT SPECIFICATION

(11) **EP 1 304 409 B1**
(45) Date of publication and mention of the grant of the patent: **06.03.2019**
(21) Application number: 01124770.7
(22) Date of filing: 17.10.2001
(51) Int. Cl.: D04H 13/00, B32B 5/26, D06N 5/00, D06N 3/00

(54) **Two-layer laminate**
Zweischichtiges Laminat
Stratifié en deux couches

(43) Date of publication of application: 23.04.2003
(73) Proprietor: Low & Bonar B.V., 6827 AV Arnhem (NL)
(72) Inventor: Berkhoff, Marc Robert, 6714 GC Ede (NL); Schelbergen, Paulus Christiaan Antonius Maria, 6662 XC Elst (NL); Dijkema, Jan, 7201 GB Zutphen (NL)
(74) Representative: Heimann, Anette

(56) References cited:
- EP-A- 0 208 918
- EP-A- 0 435 001
- WO-A-01/08879
- US-A- 5 616 395

## Description

The present invention relates to a two-layer laminate comprising a first nonwoven layer comprising thermoplastic fibers, said first nonwoven layer being pre-consolidated and pre-shrunk, a second nonwoven layer comprising glass fibers, and at least one thermoplastic binder, wherein said first and said second nonwoven layer are bonded together by application of heat. Furthermore, the invention is directed to a process of manufacturing such a two-layer laminate.

Such a laminate is known from EP 0 667 427 A1 which discloses a process for manufacturing a two-layer textile reinforcement intended for the production of bituminous roofing sealing sheet, and reinforcements obtained thereof. In the process according to EP 0 667 427 A1 firstly a first layer based on a nonwoven ply is consolidated by mechanical or hydraulic bonding and heat-stabilizing. Then this consolidated and heat-stabilized first layer is assembled on a mineral filamentary second layer, either by laminating, or by needling or by stitchknitting. In the case of the two layers being assembled by laminating, the adhesive used is a thermosetting or thermoplastic polymer, which is coated in a quantity between 5 and 40 g/m² on the first layer. Assembling is then achieved e.g. by rotary heating machines. The two-layer laminate manufactured by the process as described in EP 0 667 427 A1 should exhibit an excellent thermal stability without exhibiting any curling effect.

EP 0 208 918 A2 is directed to composites of heat-stabilized, mechanically-fastened networks of high tenacity continuous filament polyester yarns, either as the sole continuous filament reinforcing element or in combination with a mat and/or a fiberglass scrim. According to EP 0 208 918 A2 " mechanically fastened" indicates that the network is held together by mechanical means, such as by the warp-knit weft-insertion technique. This patent document thus discloses one or two open grid layers heat-stabilized and/or bonded to each other by the application of heat. Such composites are said to contribute to improved evenness in the final roofing membrane.

EP 0 435 001 A2 has for its object to provide an at least two-layer laminate and a method of manufacturing thereof, which laminate comprises a first spun-bonded nonwoven layer comprising endless filaments, and a wet laid nonwoven layer comprising short staple inorganic fibers and a thermoplastic binder. The thermoplastic binder through application of heat bonds the laminate. Such laminates should show higher flexibility and be at the same time thinner than those known previously.

WO 01/08882 A2 discloses a laminate comprising at least one pre-consolidated non-woven layer containing glass staple fibers needled with at least one thermally shrunken non-woven layer of synthetic fibers, wherein a portion of the fibers of the upper synthetic nonwoven layer passes through the nonwoven layer of glass fibers and wherein the laminate contains a consolidation binder.
Here too, better mechanical strength and improved dimensional stability are mentioned as advantages.

The prior art laminates - although already exhibiting good dimensional stability and evenness - still leave some room for improvement. When for example used as reinforcements in bituminous roofing membranes they have to fulfil simultaneously and in addition a variety of other demands, such as flatness, flexibility, thinness, resistance to delamination, high tenacity, good tear strength, sufficient contribution to fire retardancy, easy saturation behavior when being dipped in bitumen and - last but not least - easy and economical manufacturing processes. While some of the mechanical pretensions can be achieved by the application of laminates comprising glass grids, special and relatively costly measures must be taken to obtain a good fixation of the grid in the laminate, i.e. with a high enough resistance to delamination. Furthermore, usually grids do not contribute to the needed fire retardancy. Two-layer laminates containing glass mats instead of grids ask for relatively expensive production techniques and/or special additives to overcome the well-known problem of curling, which is inherent to a combination of two different materials.

There is still a need for the provision of laminates exhibiting both the mechanical and fire retardant properties outlined above that are less expensive and easy to produce and to handle.

The present invention has for its objective to provide the skilled person with a two-layer laminate and a process of manufacturing thereof that combine the above-mentioned technical needs with the advantage of low cost and easy manufacturing.

It has now been found that this objective can be met with a two-layer laminate as described in the opening paragraph, wherein said second nonwoven layer is pre-consolidated and wherein the thermoplastic binder originates from said second nonwoven layer.

It is established that the term "fibers" within the framework of the present invention is to be understood in its broadest terminology in accordance with DIN 60 001 or ISO 2076, and that hence by fibers are meant all fibers, irrespective of whether they are virtually endless, i.e. filaments, or structures limited in length, such as staple fibers. Of course the term "fibers" also encompasses mixtures of virtually endless fibers and fibers limited in length.

The thermally bonded two-layer laminate according to the invention - comprising nonwoven layers, i.e. mats, and no grids or scrims - shows excellent mechanical properties. In particular it is flat and does not exhibit any curls or undulation, has a remarkable resistance to delamination and offers a substantial contribution to the fire retardancy of the final membrane. It could not be expected from the prior art that the object of the invention could be achieved without a scrim.

Preferably, the first nonwoven layer comprises endless fibers, in the form of spun-bonded filaments. The manufacture of a spun-bonded nonwoven layer is known in the art and needs no further elucidation here.

The second nonwoven layer may comprise the glass fibers in various forms, such as wetlaid or drylaid staple fibers or filaments, but preferably in the form of staple fibers.

It is an essential feature of the laminate according to the present invention that the thermoplastic binder used originates form the second non-woven layer, i.e. the glass fiber layer. Such binders are known to those skilled in the art. They are usually thermoplastic polymers, with or without crosslinking agents, such as polyester, preferably copolyester, polyamide, copolyamide, polypropylene, polyurethane, acrylics, ethylene vinyl acetate or a blend of two or more of these agents.

Preferably, the thermoplastic binder is in the form of powder, fibrils, fibers or as an emulsion.

Although, the first nonwoven layer may comprise a variety of thermoplastic fibers, such as polyamide, polyolefines or polyesters, it is preferred that the first nonwoven layer of the two-layer laminate predominately consists of polyester and/or co-polyester and even more preferred that this first nonwoven layer predominately consists of polyethylene terephthalate.

Furthermore, this first nonwoven layer in the two-layer laminate is pre-consolidated and pre-shrunk. The pre-consolidation of the first nonwoven layer can be achieved by - but is not limited to - methods known per se, such as calendering, thermal bonding, needling or fluid dynamic - preferably hydrodynamic - treatment of the first nonwoven layer.

Pre-shrinkage can be obtained by heat and/or pressure treatment of the first nonwoven layer at temperatures between 80 and 240 °C, preferably from 100 to 220 °C.

It is further essential for the invention that also the second nonwoven layer, i.e. the layer comprising the glass fibers, is pre-consolidated. This pre-consolidation in principle can be accomplished thermally or mechanically, e.g. by needling and/or fluidentanglement, such as hydroentanglement. It also can be achieved by means of well-known chemical bonding agents. Such bonding agents are known in the art. It is, however, preferred that the second nonwoven layer is pre-consolidated chemically. It is an advantage of the two-layer laminate according to the invention that the pre-consolidation of the second nonwoven layer is achieved by a different binder than the one that is responsible for the bonding of the two layers. On the other hand it is possible, that the two-layer laminate comprises only one bonding agent that takes care of the pre-consolidation of the second nonwoven layer as well as of the bonding of the two nonwoven layers.

The weight of the first nonwoven layer of the laminate according to the invention is in a range from 50 and 300 g/m², preferably between 80 and 200 g/m². The weight of the second nonwoven layer ranges from 10 to 150 g/m², preferably from 30 to 100 g/m².

The amount of thermoplastic binder is in the range from 5 to 55 weight percent, preferably 10 to 30 weight percent with respect to the amount of glass fibers in the second nonwoven layer.

The laminate according to the invention can be combined with further layers, if desired. It may, e.g., be helpful to combine the two-layer laminate with an additional glass fiber scrim, e.g. in a final process step.

The laminate can further contain well-known chemical bonding agents for further consolidation.

The invention is further directed to a process for preparing the two-layer laminate comprising the steps of providing a first nonwoven layer comprising thermoplastic fibers, which is subsequently pre-consolidated and pre-shrunk, providing a second nonwoven layer comprising glass fibers, bonding said first and second nonwoven layer together by means of at least one thermoplastic binder and the application of heat, characterized in that prior to bonding said first and second nonwoven layer together, said second nonwoven layer is pre-consolidated and that said thermoplastic binder is provided within said second nonwoven layer.

In this process it is preferred that the thermoplastic binder is provided within the second nonwoven layer in the form of powder, fibrils, fibers or as an emulsion.

It is preferred for the process that the fibers of the first nonwoven layer predominately are spun from polyester and/or co-polyester, preferably from polyethylene terephthalate.

Furthermore, it is of advantage that the second nonwoven layer additionally comprises chemical and/or thermal bonding agents.

The process of the invention has for its advantage that the expensive intermediate step of coating of one of the laminate layers is no more necessary. Due to the fact that the thermoplastic binder, preferably in the form of thermoplastic polymers, with or without crosslinking agents, such as polyester, preferably copolyester, polyamide, copolyamide, polypropylene, polyurethane, acrylics, ethylene vinyl acetate or a blend, is provided together with the second nonwoven layer, the bonding step can be performed easier and more economically.

For the process it is furthermore advantageous that first and second nonwoven layer are additionally bonded by chemical means.

The invention will be further elucidated by the following non-limiting example:

### Example

A first nonwoven layer, which consists of spun polyester filaments (4 - 6 dtex) is provided. This layer has a weight of approx. 160 g/m². This polyester nonwoven layer is pre-consolidated by mechanical needling and subsequently pre-shrunk. Pre-shrinkage is obtained by heating with infrared radiation at a temperature of 125°C for 8 seconds.
A second nonwoven layer is provided, consisting of 51 weight-% of glass staple fibers, 34 weight-% of co-polyester staple fibers with a melting point of 200°C and 15 weight-% of PVA, the latter being used for the pre-consolidation of this wetlaid nonwoven layer.
Bonding the two nonwoven layers together is performed by applying heat using a through air drum. The temperature of the air is 210° C.

The resulting bi-laminate is flat after laminating and remains flat also after bituminizing.

## Claims

1. A process for preparing a two-layer laminate comprising the steps of providing a first nonwoven layer comprising thermoplastic fibers, which is subsequently pre-consolidated and pre-shrunk by heat and/or pressure treatment at temperatures between 80° and 240°C, providing a second nonwoven layer, i.e. a mat, and no grid or scrim, comprising glass fibers, bonding said first and second nonwoven layer together by means of at least one thermoplastic binder and the application of heat, **characterized in that** prior to bonding said first and second nonwoven layer together, said second nonwoven layer is pre-consolidated and that said thermoplastic binder is provided only within said second nonwoven layer.

2. The process according to claim 1, **characterized in that** the fibers of said first nonwoven layer predominately are spun from polyester and/or co-polyester, preferably from polyethylene terephthalate.

3. The process according to claim 1 or 2, **characterized in that** the second nonwoven layer additionally comprises chemical and/or thermal bonding agents, preferably copolyesters.

4. A two-layer laminate obtainable by the process of claim 1 comprising a first nonwoven layer comprising thermoplastic fibers, said first nonwoven layer being pre-consolidated and pre-shrunk, a second nonwoven layer, i.e. a mat, and no grid or scrim, comprising glass fibers, and at least one thermoplastic binder, said first and said second nonwoven layer are bonded together by means of at least one thermoplastic binder and the application of heat, **characterized in that** said second nonwoven layer is pre-consolidated and that the thermoplastic binder originates only from said second nonwoven layer.

5. The two-layer laminate according to claim 4, **characterized in that** the thermoplastic binder is in the form of powder, fibrils, fibers or as an emulsion.

6. The two-layer laminate according to claim 4 or 5, **characterized in that** the fibers of said first nonwoven layer predominately consist of polyester and/or co-polyester, preferably of polyethylene terephthalate.

7. The two-layer laminate according to any one of claims 4 to 6, **characterized in that** the pre-consolidation of said first nonwoven layer is achieved by means selected from the group containing calendering, thermal bonding, needling, fluid dynamic treatment, preferably hydrodynamic treatment, or combinations thereof.

8. The two-layer laminate according to any one of claims 4 to 7, **characterized in that** the pre-shrinkage of the first nonwoven layer is achieved by heat and/or pressure treatment of said nonwoven layer at temperatures between 80 and 240 °C, preferably between 100 and 220 °C.

9. The two-layer laminate according to any one of claims 4 to 8, **characterized in that** the second nonwoven layer additionally comprises chemical and/or thermal bonding agents.

10. The two-layer laminate according to claim 9, **characterized in that** the second nonwoven layer additionally comprises copolyesters as thermal bonding agents.

## Patentansprüche

1. Verfahren zur Herstellung eines zweischichtigen Laminats, umfassend die Schritte des Bereitstellens einer ersten Vliesschicht, umfassend thermoplastische Fasern, die anschließend vorverfestigt und durch Wärme- und/oder Druckbehandlung bei Temperaturen zwischen 80 ° und 240 °C vorgeschrumpft wird, Bereitstellen einer zweiten Vliesschicht, d. h. einer Matte, und kein Gitter oder Garngelege, umfassend Glasfasern, die die erste und zweite Vliesschicht mittels mindestens eines thermoplastischen Bindemittels und der Anwendung von Wärme miteinander verbindet, **dadurch gekennzeichnet, dass** vor dem Verbinden der ersten und zweiten Vliesschicht miteinander die zweite Vliesschicht vorverfestigt ist und dass das thermoplastische Bindemittel nur innerhalb der zweiten Vliesschicht vorgesehen ist.

2. Verfahren nach Anspruch 1, **dadurch gekennzeichnet, dass** die Fasern der ersten Vliesschicht überwiegend aus Polyester und/oder Co-Polyester, vorzugsweise aus Polyethylenterephthalat, gesponnen werden.

3. Verfahren nach Anspruch 1 oder 2, **dadurch gekennzeichnet, dass** die zweite Vliesschicht zusätzlich chemische und/oder thermische Verbindungsmittel, vorzugsweise Copolyester, umfasst.

4. Zweischichtiges Laminat, erhältlich durch das Verfahren von Anspruch 1, umfassend eine erste Vliesschicht, umfassend thermoplastische Fasern, wobei die erste Vliesschicht vorverfestigt und vorgeschrumpft ist, eine zweite Vliesschicht, d. h. eine Matte, und kein Gitter oder Garngelege, umfassend Glasfasern, und mindestens ein thermoplastisches Bindemittel, wobei die erste und die zweite Vliesschicht mittels mindestens eines thermoplastischen Bindemittels und der Anwendung von Wärme miteinander verbunden sind, **dadurch gekennzeichnet, dass** die zweite Vliesschicht vorverfestigt ist und dass das thermoplastische Bindemittel nur von der zweiten Vliesschicht stammt.

5. Zweischichtiges Laminat nach Anspruch 4, **dadurch gekennzeichnet, dass** das thermoplastische Bindemittel in Form von Pulver, Fibrillen, Fasern oder als Emulsion vorliegt.

6. Zweischichtiges Laminat nach Anspruch 4 oder 5, **dadurch gekennzeichnet, dass** die Fasern der ersten Vliesschicht überwiegend aus Polyester und/oder Co-Polyester, vorzugsweise aus Polyethylenterephthalat, bestehen.

7. Zweischichtiges Laminat nach einem der Ansprüche 4 bis 6, **dadurch gekennzeichnet, dass** die Vorverfestigung der ersten Vliesschicht durch Mittel erreicht wird, die ausgewählt sind aus der Gruppe, die Kalandrieren, thermisches Verbinden, Vernadelung, strömungsdynamische Behandlung, vorzugsweise hydrodynamische Behandlung oder Kombinationen davon enthält.

8. Zweischichtiges Laminat nach einem der Ansprüche 4 bis 7, **dadurch gekennzeichnet, dass** die Vorschrumpfung der ersten Vliesschicht durch Wärme- und/oder Druckbehandlung der Vliesschicht bei Temperaturen zwischen 80 und 240 °C, vorzugsweise zwischen 100 und 220 °C, erreicht wird.

9. Zweischichtiges Laminat nach einem der Ansprüche 4 bis 8, **dadurch gekennzeichnet, dass** die zweite Vliesschicht zusätzlich chemische und/oder thermische Verbindungsmittel umfasst.

10. Zweischichtiges Laminat nach Anspruch 9, **dadurch gekennzeichnet, dass** die zweite Vliesschicht zusätzlich Copolyester als thermische Verbindungsmittel umfasst.

## Revendications

1. Procédé de préparation d'un stratifié à deux couches comprenant les étapes de fourniture d'une première couche non tissée comprenant des fibres thermoplastiques, qui est ensuite pré-consolidée et pré-rétrécie par un traitement thermique et/ou sous pression à des températures allant de 80° à 240°C, fourniture d'une seconde couche non tissée, c'est-à-dire un mat, et aucun treillis ou canevas, comprenant des fibres de verre, liaison desdites première et seconde couches non tissées ensemble au moyen d'au moins un liant thermoplastique et par application de chaleur, **caractérisé en ce qu'**avant de lier ensemble les première et seconde couches non tissées, ladite seconde couche non tissée est pré-consolidée et **en ce que** ledit liant thermoplastique est ménagé uniquement à l'intérieur de ladite seconde couche non tissée.

2. Procédé selon la revendication 1, **caractérisé en ce que** les fibres de ladite première couche non tissée sont principalement filées à partir de polyester et/ou de co-polyester, de préférence à partir de polyéthylène téréphtalate.

3. Procédé selon la revendication 1 ou 2, **caractérisé en ce que** la seconde couche non tissée comprend en outre des agents de liaison chimique et/ou thermique, de préférence des copolyesters.

4. Stratifié à deux couches pouvant être obtenu par le procédé selon la revendication 1, comprenant une première couche non tissée comprenant des fibres thermoplastiques, ladite première couche non tissée étant pré-consolidée et pré-rétrécie, une seconde couche non tissée, c'est-à-dire un mat, et aucun treillis ou canevas, comprenant des fibres de verre, et au moins un liant thermoplastique, lesdites première et seconde couches non tissées étant liées au moyen d'au moins un liant thermoplastique et par application de chaleur, **caractérisé en ce que** ladite seconde couche non tissée est préalablement consolidée et **en ce que** le liant thermoplastique provient uniquement de ladite seconde couche non tissée.

5. Stratifié à deux couches selon la revendication 4, **caractérisé en ce que** le liant thermoplastique se présente sous forme de poudre, de fibrilles, de fibres ou sous forme d'émulsion.

6. Stratifié à deux couches selon la revendication 4 ou 5, **caractérisé en ce que** les fibres de ladite première couche non tissée sont constituées principalement de polyester et/ou de co-polyester, de préférence de polyéthylène téréphtalate.

7. Stratifié à deux couches selon l'une quelconque des revendications 4 à 6, **caractérisé en ce que** la pré-consolidation de ladite première couche non tissée est réalisée par des moyens choisis dans le groupe comprenant un calandrage, une liaison thermique, une aiguilletage, un traitement dynamique par fluide, de préférence un traitement hydrodynamique, ou des combinaisons de ceux-ci.

8. Stratifié à deux couches selon l'une quelconque des revendications 4 à 7, **caractérisé en ce que** le pré-rétrécissement de la première couche non tissée est obtenu par traitement thermique et/ou sous pression de ladite couche non tissée à des températures entre 80 et 240°C, de préférence entre 100 et 220°C.

9. Stratifié à deux couches selon l'une quelconque des revendications 4 à 8, **caractérisé en ce que** la seconde couche non tissée comprend en outre des agents de liaison chimique et/ou thermique.

10. Stratifié à deux couches selon la revendication 9, **caractérisé en ce que** la seconde couche non tissée comprend en outre des copolyesters en tant qu'agents de liaison thermique.
